# EUROPEAN PATENT APPLICATION

(11) **EP 4 331 796 A1**
(43) Date of publication of application: **06.03.2024**
(21) Application number: 22306306.6
(22) Date of filing: 02.09.2022
(51) Int. Cl.: B28B 1/00, B33Y 70/10, C04B 33/13, C04B 35/01, C04B 35/053, C04B 35/057, C04B 35/111, C04B 35/14, C04B 35/46, C04B 35/486, C04B 35/52, C04B 35/528, C04B 35/56, C04B 35/565, C04B 35/583, B29C 33/38, B29C 35/08, B29C 64/40, B29K 105/06

(54) **ACTINIC RADIATION CURABLE CYANOACRYLATE COMPOSITIONS FOR CERAMICS AND INVESTMENT CASTING**

(71) Applicant: ARKEMA FRANCE, 92700 Colombes (FR)
(72) Inventor: NUNEZ, Sean, Lewisburg 17837 (US)
(74) Representative: Leca, François Michel

(57) **Abstract**

A method of forming an article of manufacture comprises: a) forming a precursor to the article of manufacture using a first material comprising an actinic radiation curable composition comprising at least one cyanoacrylate and optionally at least one filler; b) actinically curing the precursor to form a cured precursor article comprising a cured actinic radiation curable composition; c) optionally forming an intermediate article of manufacture from a second material while using the cured precursor article as at least one of a support, a positive mold, or a negative mold for the second material; and d) heating the cured precursor article to a temperature sufficient to decompose the cured actinic radiation curable composition to form or isolate the article of manufacture. The method is suitable for the use of additive manufacturing in developing dental materials, jewelry, or high strength industrial products.

## Description

### FIELD OF THE INVENTION

The present invention relates to low-ash content actinic radiation curable compositions useful for three dimensional printing of ceramics and investment casting molds. The invention relates to methods of producing ceramics, molds, and investment casting molds.

### BACKGROUND OF THE INVENTION

Over the last decade there has been great interest in the use of additive manufacturing for a variety of industrial applications in casting applications to develop articles, e.g., dental materials and jewelry, and to permit rapid prototyping with the development of molds.

One known method for manufacturing metal parts involves investment casting, wherein a pattern is used to fabricate a mold made of a refractory material. A molten metal is then cast into the mold to form a part having a desired shape. Thus, in investment casting, a disposable foundry pattern is used to produce a mold in which parts can be cast. Various ways of forming and using such a disposable foundry pattern are known in the art. For example, a disposable foundry pattern may be formed from a substance, such as a wax, and then removed from a refractory material in which it has been invested by melting, leaving behind a mold in the refractory material. Alternatively, it is also known to photocure (meth)acrylate monomers to provide thermoset disposable foundry patterns, which then (following investment in a refractory material) must be subjected to thermolysis conditions in order to create the mold. If (meth)acrylate-functionalized polyethers are instead employed, the resulting photocured disposable foundry pattern is swellable in water but is very difficult to remove from a refractory material in which it is invested using an aqueous medium.

Methods of utilizing photocurable materials that produce no or little residual ash after decomposition by thermolysis of the sacrificial mold or support of the photocurable material are desirable for these applications because any remaining ash on a surface of a mold will lead to a defect on a surface of the article made from the mold. The same is true for the production of ceramics, since the residual ash would be a contaminant in the ceramic part that would lead to a flaw in the finished part. In addition, it is important that the sacrificial material melts quickly to a low viscosity and then decomposes easily and quickly at the thermolysis temperature in order to not produce physical defects in the final mold or ceramic part due to bubbling or rapid production of gasses.

US 9,902,860 discloses photopolymer compositions for 3D printing which have low viscosity, proper curing rate, low volume shrinkage, and low ash content. Such compositions may be used in 3D printing for direct investment casting of products and rapid prototyping. The '860 patent recites a composition comprising: at least one polyfunctional (meth)acrylate monomer; at least one space-filling monomer or organic compounds; at least one (meth)acrylate monomer; at least one photo-initiator; and at least one light stabilizer, wherein the at least one light stabilizer controls a cure depth of the 3D printed objects having a low ash content, prevents photodegradation, and is selected from a group consisting of Sudan dyes, 2-(2'-hydroxy-3',5'-di-tert-butylphenyl)-5-chlorobenzortriazole, 2-(2'-hydroxy-3'-tert-butyl-5'-methylphenyl)-5-chlorobenzortriazole, 2,2'-(2,5-thiophenediyl)bis(5-tert-butylbenzoxazole), and (2,5-bis(5-tert-butyl-benzoxazol-2-yl)thiophene.

WO2021/009382A1 discloses a method for printing a three-dimensional article, to a system thereof, to the use thereof and to a three-dimensional printed article manufactured therewith. The '382 Publication relies on the use of a liquid resin comprising cyanoacrylate-based monomers and acidic inhibitors.

### SUMMARY OF THE INVENTION

Accordingly, the development of alternative compositions from which disposable foundry patterns can be readily produced, wherein the disposable foundry patterns can be invested in a refractory material but then easily removed by a burnout procedure to leave the foundry pattern with a low ash content or an easily removable composite filler material removable by mechanical means (compressed air, manually) or solvation (water or solvent) is highly desirable. There remains a need for a method of utilizing photocurable materials that produce no or little residual ash after thermolysis of the sacrificial mold or support of the photocurable material. Likewise, these materials need to decompose rapidly without rapid and violent production of gasses that lead to rupture of the part of green ceramic.

Photocurable formulations capable of easy burnout with low residual ash are highly desirable in these applications. Cyanoacrylates achieve such desired burnout properties solely or with the added benefit of formulated composite or ceramic applications where typical acrylate formulations may not properly photocure due to the actinic radiation-absorbing nature of some filler materials (e.g., ceramic precursor particles). As used herein, actinic radiation refers to visible or ultra violet light that is capable of initiating a chemical reaction.

There are three approaches that can benefit from the unique flexibility offered by additive manufacturing using an actinic radiation curable material, also referred to as three-dimensional or 3-D printing.

The first is the production of ceramic (including refractory) composite articles. The ceramic articles may be made by 3-D printing a green ceramic, which is a precursor to a final ceramic part. The 3-D printing material (referred to as a 'first material' herein) comprises an actinic radiation curable composition and a relatively high loading of filler, such as ceramic particles, that would be sintered to form the final ceramic part. The actinic radiation curable composition serves to hold the ceramic particles together. The sintering process is conducted at a high enough temperature to simultaneously decompose the actinic radiation curable composition and form the final ceramic part. Refractory materials are made from the inventive method using a similar method, except that filler materials are suitable refractory materials and may also further include fiber reinforcement, such as carbon fibers or silicon nitride fibers, or alloys, such as metal alloys. In one embodiment, the articles are finished articles themselves, suitable for any industrial use requiring high strength refractory materials.

In another embodiment, the method provided herein may be used to make a mold or support (referred to herein itself as an "article of manufacture") for a metal or refractory or ceramic mold for a subsequently produced part. In this method, known as investment casting or precision casting or lost-wax casting, a disposable (or sacrificial) foundry pattern is used to produce a mold in which parts can be cast. Various ways of forming and using such a disposable foundry pattern are known in the art. For example, a disposable foundry pattern may be formed from a substance, such as a wax, and then removed from a refractory material in which it has been invested by decomposing (through burning, vaporizing, or melting), leaving behind a cavity in the refractory material for cast or injection molded jewelry, dental, or metal manufacturing. In the present invention, the sacrificial foundry pattern is made by 3-D printing a first material which may be a filler-free actinic radiation curable composition, serving as a sacrificial material after curing, and then forming the ceramic or refractory material mold around or inside of the sacrificial material. The ceramic or refractory material mold containing the foundry pattern is heated to a temperature sufficient to decompose the cured actinic radiation curable composition and to form the completed mold.

A method of forming an article of manufacture using a precursor is disclosed. As used herein, the term "precursor" is intended to mean different things depending on the embodiment. In embodiments in which no second material is used and the first material is sintered to form the final ceramic part, the first material is a precursor in the sense that the actinic radiation curable part is burned out from the first material to form the final article of manufacture. In some aspects of such embodiments, the first material may be a green ceramic article of manufacture that when sintered becomes the finished ceramic article of manufacture. On the other hand, in embodiments in which the first material is used as a support or mold for a second material, the first material is a precursor in the sense that, after curing, the cured precursor article either serves as a mold or support itself to form the article of manufacture or serves as a sacrificial mold used to form a mold that is then used to form the article of manufacture.

According to a general embodiment of the present invention, a method of forming an article of manufacture comprises the steps of:
a) Forming a precursor to the article of manufacture using a first material, wherein the first material comprises i) an actinic radiation curable composition and optionally at least one filler;
b) Actinically curing the precursor to form a cured precursor article comprising a cured actinic radiation curable composition;
c) Optionally forming an intermediate article of manufacture from a second material while using the cured precursor article as at least one of a support, a positive mold, or a negative mold for the second material; and
d) Heating the cured precursor article to a temperature sufficient to decompose the cured actinic radiation curable composition to: (i) form the article of manufacture, when step c) is not performed or (ii) isolate the article of manufacture by removal of the first material from the intermediate article of manufacture, when step c) is performed;
wherein the actinic radiation curable composition comprises at least one cyanoacrylate and at least one photoinitiator.

In an embodiment of the invention, step c) is not performed and the first material includes at least one filler.

### DETAILED DESCRIPTION OF THE INVENTION

### Methods

Methods of forming an article of manufacture using a precursor are provided. In one embodiment, the method includes:
a) Forming a precursor to the article of manufacture using a first material. The first material comprises: i) an actinic radiation curable composition and ii) optionally at least one filler. The actinic radiation curable composition comprises at least one cyanoacrylate and at least one photoinitiator. According to embodiments of the invention, steps a) and b) are a 3D printing process. The Brookfield viscosity of the first material (with or without the filler) may be within a range suitable for application by any appropriate 3D printing system at the temperature of application of the 3D printing system, such as room temperature or an elevated temperature. For example, the Brookfield viscosity of the first material in the absence of a filler may be at least 1 mPa.s, 2 mPa.s, or 5 mPa.s and no more than 200 mPa.s, 150 mPa.s, 100 mPa.s, 75 mPa.s, 50 mPa.s, 25 mPa.s, or no more than 10 mPa.s, at 40°C. In cases wherein the filler is included, the viscosity of the first material will likely be much higher. In any event, the viscosity is primarily dictated by the requirements of the 3D printing system and can be adjusted in conventional ways (e.g., reducing the viscosity by adding reactive or non-reactive diluents).
b) Actinically curing the precursor to form a cured precursor article comprising a cured actinic radiation curable composition.
c) Optionally forming an intermediate article of manufacture from a second material while using the cured precursor article as at least one of a support, a positive mold, or a negative mold for the second material.
d) Heating the cured precursor article to a temperature sufficient to decompose the cured actinic radiation curable composition to: (i) form the article of manufacture, when step c) is not performed or (ii) isolate the article of manufacture by removal of the first material from the intermediate article of manufacture, when step c) is performed, wherein the actinic radiation curable composition comprises at least one cyanoacrylate and at least one photoinitiator. Preferably, the heating step is done in a manner to accomplish the complete decomposition of all of the cured actinic radiation curable composition. It shall be understood that encompassed within this step is the decomposition of a significant portion of the cured actinic radiation curable composition, preferably nearly all of it, more preferably at least 99% of it (as measured by the difference from 100% of the fraction of the amount by weight remaining divided by the amount by weight present before heating), more preferably at least 99.9% of it, still more preferably 99.99% of it, and most preferably substantially all or all of it according to analytical detection methods.

According to embodiments of the invention, the cured precursor article may be a green ceramic part, namely a part that is bound only by the cured precursor article before it has been sintered or fired. The green ceramic part may be heated to a temperature sufficient to decompose the cured actinic radiation curable material as in step d) and sintered to provide a ceramic article of manufacture. The heating and sintering steps may be carried out sequentially. In any event, after sintering, the resulting part may be a finished product. According to an embodiment, when sintered, the resulting ceramic part may become a mold. According to an embodiment, the step d) heating is also the sintering step to form a ceramic part.

According to some embodiments of the invention, the cured precursor article formed in step b) may be a sacrificial mold for investment casting. If the cured precursor article is a sacrificial mold, whether positive or negative, it preferably (but not necessarily) does not include the optional filler. If the cured precursor article is a sacrificial mold for investment casting, step c) is performed, and in this case, the second material is the material used to form the actual mold (or a reverse mold used to make a mold), using the cured precursor article as a sacrificial mold. In some cases, the second material may be a refractory material, which can be viewed itself as an article of manufacture and serve as the mold for a subsequently manufactured article, made by casting, for example. Step d) then would be heating the sacrificial mold together with the second material at a temperature sufficient to decompose the cured actinic radiation curable composition of the precursor article and leave behind the final mold as the article of manufacture. Thus, in this embodiment, step d) of heating the cured precursor article to a temperature sufficient to decompose the cured actinic radiation curable composition serves to the isolate the article of manufacture by removal of the first material from the intermediate article of manufacture.

If the cured precursor article is a support, it may or may not include the optional filler. If the cured precursor article is a support, step c) may be performed, and in this case, the second material is the material used to form the article of manufacture, by, for example 3-D printing, using the cured precursor article as a support or pattern. Step d) then would be heating the support together with the second material, which would decompose the cured actinic radiation curable composition of the support and leave behind the article of manufacture.

According to an embodiment, step c) is not performed and the first material includes the at least one filler. In this embodiment, step d) heating of the cured precursor article to a temperature sufficient to decompose the cured actinic radiation curable composition serves to form the article of manufacture by both decomposing the cured actinic radiation curable composition and sintering, either along with the heating step or subsequently, the filler. In this embodiment, the cured actinic radiation curable composition essentially serves as a scaffolding for the filler. According to an embodiment of the invention, in step c), at least a portion of the cured precursor article contacts at least a portion of the intermediate article of manufacture. For example, the cured precursor article may define a recess and the second material may be poured into the recess such that the article of manufacture is in contact with the cured precursor article upon curing of the second material. Or, the cured precursor article may form a template or pattern to permit 3D printing of the second material, which may comprise an actinic radiation curable composition, either as defined herein or without a cyanoacrylate, into the article of manufacture.

According to certain embodiments of the invention, step c) is performed.

According to another embodiment, step c) is not performed and the at least one filler is included in step a). In this embodiment, the at least one filler is sinterable or vitrifiable at a temperature equal to or higher than the temperature sufficient to decompose the cured actinic radiation curable composition, and the at least one filler comprises at least one of a metal powder, a metal oxide powder, a preceramic, a glass powder, polymer powder, or a combination thereof.

According to certain embodiments of the invention, heating the precursor article to the temperature to decompose the cured actinic radiation curable composition to form the article of manufacture produces less than 0.2 wt.%, preferably less than 0.1 wt.%, more preferably less than 0.05 wt.%, more preferably less than 0.01 wt.%, and most preferably less than 0.001 wt.% of ash based on the weight of the first material. According to an embodiment, after step d), less than 0.01 grams per cm² of ash remain on the surface of the article of manufacture.

According to certain embodiments of the invention, the actinic radiation curable composition forms a solid resin matrix when cured and the at least one filler comprises at least one filler which remains insoluble in the solid resin matrix. According embodiments of the invention, the first material includes the filler in a volume of at least 20 vol%, preferably at least 35 vol.%, more preferably at least 40 vol.%, more preferably at least 45 vol.%, most preferably at least 55 vol.% of the at least one filler based on the total volume of the first material including the at least one filler. According embodiments of the invention, the first material includes the filler in a volume of at most 85 vol.% and preferably at most 80 vol.%, and most preferably about 72 vol.% of the at least one filler based on the total volume of the first material including the at least one filler. Whenever lower and upper limits of a range are provided herein, the invention includes both the range of values extending from any lower limit, from any upper limit, or between any lower limit and any upper limit provided. In general, it is desirable to have enough filler to allow for adequate body in the cured part when the precursor is heated to densify and to avoid or limit shrinkage. On the other hand, one should not have so much filter such that it is difficult to obtain a composition which has a suitable viscosity.

According to another embodiment of the invention, step a) and step b) are iteratively performed in the following sequence of steps:
a1) Contacting a first portion of the first material with a substrate.
b1) Curing the first portion, at least partially, to provide a cured first region.
a2) Contacting a second portion of the first material with at least a portion of the cured first region.
b2) Curing the second portion, at least partially, to provide a cured second region adhered to at least a portion of the cured first region.
Steps a2) and b2) may be repeated a desired number of times to form the cured precursor article. The 'contacting' refers to relative motion; the 3D printing system may bring the two components into contact with one another by exerting movement to one, the other, or both. According to some embodiments, the cured second region may be the same size and/or shape as the cured first region. According to some embodiments the cured second region may have a different size and/or shape than the cured first region.

In another embodiment, step a) and step b) together comprise at least the following steps:
a1) Coating a first layer of the first material in liquid form onto a substrate.
b1) Exposing the first layer imagewise to actinic radiation to form a first exposed imaged cross-section, wherein the radiation is of sufficient intensity and duration to cause at least partial curing of the first layer in the exposed area(s).
a2) Coating an additional layer of the first material in liquid form onto the previously exposed imaged cross-section.
b2) Exposing the additional layer imagewise to actinic radiation to form an additional imaged cross-section, wherein the radiation is of sufficient intensity and duration to cause at least partial curing of the additional layer in the exposed area(s) and to cause adhesion of the additional layer to the previously exposed imaged cross-section.
Steps a2) and b2) may be repeated a desired number of times to form the cured precursor article. The substrate may be a powder bed comprising a material selected from the group consisting of ceramic, metal, and a polymer, such as is used in binder jet printing. In that type of printing, curable material is applied to a powder of a ceramic, metal, or polymer powder then cured. The powder is then heated to decompose the 'binder' and fuse the powder together.

According to another embodiment of the invention, steps a) and b) together comprise at least the following steps:
a1) Providing a carrier and a build surface, optionally with an optically transparent member, the carrier and build surface defining a build region there between.
a2) Filling the build region with the first material.
b1) Continuously or intermittently irradiating the build region with actinic radiation to form a cured composition from the first material.
a3) Continuously or intermittently advancing the carrier away from the build surface.
Steps a2), b1), and a3) may be repeated any desired number of times to form the cured precursor article.

According to an environmentally advantageous embodiment of the invention, in step d), decomposition products of the first material are isolated. According to an embodiment of the invention, the isolated decomposition products, such as (meth)acrylate monomers including cyanoacrylate monomers, may be reused in step a). Such decomposition products may vaporize off during the heating step d) then be condensed in a known way. This 'isolation' is different from the isolation of the article of manufacture in step d) done by removal of the first material from the intermediate article of manufacture, when step c) is performed. This latter isolation is a result of the decomposition of the cured actinic radiation curable composition leaving the article of manufacture.

### Cyanoacrylates

The actinic radiation curable compositions of the present invention comprise one or more actinic radiation curable monomers, in particular one or more actinic radiation curable cyanoacrylates. For example, the actinic radiation curable monomer component of the actinic radiation curable composition may consist only of one or more cyanoacrylates (that is, the only actinic radiation curable compounds present are cyanoacrylates). In addition to one or more cyanoacrylates, the actinic radiation curable composition may comprise one or more auxiliary actinic radiation curable compounds such as methylidene malonates and/or (meth)acrylate-functionalized compounds as discussed in more detail below.

As used herein, the term "cyanoacrylate" refers to an organic compound which contains a carbon-carbon double bond, wherein one carbon atom involved in the carbon-carbon double bond is substituted with a cyano (-CN) group and an ester group.

In certain embodiments, the actinic radiation curable composition comprises at least one cyanoacrylate of formula (VI): 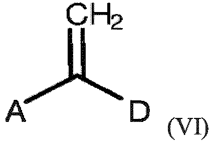 wherein:
A is CN; and
D is a carboxylic ester moiety CO₂R⁴,
R⁴ is selected from the group consisting of:
   C₁-C₁₈ linear and branched alkyl chains; terminally trimethylsilylated C₁-C₃ alkyl chains; -CH₂CF₃; -CH₂CF₂CF₃; -CH₂(CF₂)₂H; - CH₂(CF₂)₄H; - CH(CF₃)CH₃; allyl; propargyl; cyclohexyl; cyclohexenyl; methylcyclohexyl;
   methylcyclohexenyl; ethylcyclohexyl; ethylcyclohexenyl; furfuryl; phenylethyl; phenoxyethyl;
   an acrylic ester moiety of formula (VII): 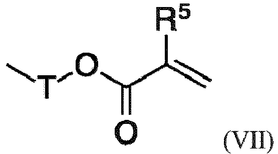 wherein
   T is (CH₂)_{Z}, wherein the value of z is between 2 and 12 inclusive; a C₃-C₁₂ branched alkylene chain; cyclohexyl; bisphenyl; or bisphenol;
   R⁵ is H, Me, CN or CO₂R⁶;
   R⁶ is a methyl or ethyl group.

In other embodiments, the actinic radiation curable composition comprises at least one cyanoacrylate of formula a group of formula (VIII) 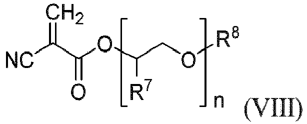 wherein
R⁷ is selected from the group consisting of H and Me,
R⁸ is selected from the group consisting of Si(Me₃)₃ and C₁-C₆ linear and branched alkyl chains,
the value of n is from 1 to 3 inclusive.

When R⁵ is H or Me in formula (VII) then the ester group D of structure (VI) comprises an acrylate or methacrylate respectively and (VI) is then a compound with two "mixed" or "hybrid" functional groups (cyanoacrylate and (meth)acrylate).

When R⁵ is CN in formula (VII), then (VI) is a bis-cyanoacrylate.

Preferred examples of cyanoacrylate esters with (meth)acrylic ester moieties, showing a hybrid or bis nature, include acryloylethyl cyanoacrylate, methacryloyldodecyl cyanoacrylate and 1,6-hexyl biscyanoacrylate.

The esters of general formula (VII) can be defined generically as alkoxyalkyl or alkylsilyloxyalkyl esters, among which the following can be preferentially mentioned: 2-methoxyethyl, 2-ethoxyethyl, 2-propoxyethyl, 2-butoxyethyl, 2-isopropoxyethyl, 2-hexyloxyethyl, 2-amyloxyethyl, 2-ethoxybutyl, 2-methoxypropyl, and 2-(1-methoxy)propyl, trimethylsilyloxyethyl, hexamethyldisiloxanoxyethyl, among others. Other examples of alkoxyalkyl type monomers are described in U.S. Pat. No. 6,977,278. The alkoxylalkyl cyanoacrylates are generally low in odor and are non-staining and non-irritating. In certain preferred embodiments R⁷ is H and R⁸ is Me or Et and n is 1. Thus, in a preferred embodiment, the compound of general formula (VI) is 2-methoxyethyl cyanoacrylate or 2-ethoxyethyl cyanoacrylate. In another preferred embodiment, R⁷ is Me, R⁸ is Me, and n is 1. Thus, the compound of general formula (VI) may be 2-(1-methoxy)propyl cyanoacrylate.

Additional examples of suitable cyanoacrylates include, but are not limited to, alkyl and cycloalkyl α-cyanoacrylates such as methyl α-cyanoacrylate, ethyl α-cyanoacrylate, propyl α-cyanoacrylate, butyl α-cyanoacrylate, and cyclohexyl α-cyanoacrylate; alkenyl and cycloalkenyl α-cyanoacrylates such as allyl α-cyanoacrylate, methallyl α-cyanoacrylate, and cyclohexenyl α-cyanoacrylate; alkynyl α-cyanoacrylates such as propargyl α-cyanoacrylate; aryl α-cyanoacrylates such as phenyl α-cyanoacrylate and tolyl α-cyanoacrylate; heteroatom-containing α-cyanoacrylates such as methoxyethyl α-cyanoacrylate, ethoxyethyl α-cyanoacrylate, and furfuryl α-cyanoacrylate; and silicon-containing α-cyanoacrylates such as trimethylsilylmethyl α-cyanoacrylate, trimethylsilylethyl α-cyanoacrylate, trimethylsilylpropyl α-cyanoacrylate, and dimethylvinylsilylmethyl α-cyanoacrylate.

The cyanoacrylate monomers defined by structure (VI) may be solid or liquid in physical form under normal ambient conditions, and may have functions that enable copolymerisation and crosslinking. Solid monomers may be dissolved in liquid monomers to yield liquid formulations. In the context of the invention, within the monomers which are substantially odor-free or of low odor, are also included those monomers which are not lachrymatory, and those whose vapors tend not to polymerize under ambient conditions to produce white deposits on the substrates to be bonded. These features are associated with low vapor pressures. Thus, for example, when R⁴ in the compound of general formula (VI) is 2-ethylhexyl, furfuryl, cyclohexyl, cyclohexenyl, terminally trialkylsilylmethyl (C₁-C₃ alkyl), or acryloylethyl cyanoacrylate, methacryloyldodecyl cyanoacrylate and 1 ,6-hexyl biscyanoacrylate, the monomer is substantially odor-free or low odor in addition to the well-known alkoxyalkyl types. Monomers of structure (VI) bearing carboxylic esters further comprising structure (VII) have second polymerizable or copolymerizable functional groups and are thus considered to have dual or "mixed or hybrid" functionality, meaning more than one functional group is present, e.g., two cyanoacrylate (CA) functional groups in one molecule of structure (VI), or one CA functional group combined with one (meth)acrylic functional group in one molecule.

When at least one cyanoacrylate monomer of structure (VI) is present, then combinations of two or more cyanoacrylate monomers of structure (VI) may be formulated according to particular needs in end use applications. For example, odor-free and stain-free cyanoacrylates may be selected from the alkoxyalkyl CA class or may be selected from non-alkoxyalkyl CAs mentioned in the preceding discussion. Alkoxyalkyl CAs are of a more hydrophilic nature, whereas 2-ethylhexyl CA, or terminally substituted trialkylsilylmethyl CAs are of a more hydrophobic nature. Mixtures of both classes thus allow adjustment of hydrophilicity-hydrophobicity while still producing an odor free formulation. Similarly, mixtures of butyl CA and 2-octyl CA allow adjustment of flexibility of the final cured adhesive by modulating the glass transition temperature of the copolymer formed. Furthermore, mixtures of alkoxyalkyl CAs, or even ECA, with bis-CAs lead to crosslinked copolymers by virtue of the dual functionality of the included bis-CAs, and the same will apply to mixtures of any CA with CAs with hybrid CA-acrylic functional groups. Mixtures of CAs, bis-CAs and hybrid CAs also give rise to copolymers with crosslinked structures. Mixed formulations also allow for optimizing cost-benefits in formulation depending on needs, for example if inexpensive ECA is acceptable to use, but increased durability is required over what is offered by polyECA, then a more sophisticated CA-acrylic hybrid or bis-CA may be included at relatively low concentration, typically less than 10%, to beneficially transform the properties of polyECA by copolymerization and crosslinking, without adding excessive cost. It will be understood that the types of mixtures and the relative concentrations of each CA monomer can be regulated to suit the needs of the particular formulation for particular application.

According to certain embodiments, the actinic radiation curable resin component of the actinic radiation curable composition comprises, consists essentially of, or consists of at least one cyanoacrylate represented by the structure H₂C=C(CN)-CO₂R, where R is selected from C₁₋₁₅ alkyl, alkoxyalkyl, cycloalkyl, alkenyl, aralkyl, aryl, allyl and haloalkyl groups. Desirably, the cyanoacrylate monomer may be selected from methyl cyanoacrylate, ethyl-2-cyanoacrylate, propyl cyanoacrylates, butyl cyanoacrylates, octyl cyanoacrylates, allyl-2-cyanoacrylate, β-methoxyethyl-2-cyanoacrylate, methoxyisopropyl-2-cyanoacrylate and combinations thereof. According to an embodiment, the at least one cyanoacrylate comprises at least one of n-butyl cyanoacrylate (n-BCA), octyl cyanoacrylate, 2-octyl cyanoacrylate, methyl 2-cyanoacrylate (MCA), ethyl 2-cyanoacrylate ECA, methoxyethyl cyanoacrylate (MECA), or a combination thereof. According to another embodiment, the at least one cyanoacrylate comprises at least one of at least one of MCA, ECA, MECA or a combination thereof. According to another embodiment the cyanaoacrylate comprises ECA, MECA, or a combination thereof. According to another embodiment, the cyanoacrylate comprises MECA.

### Fillers

The first material may not contain any filler or it may comprise filler, in addition to the actinic radiation curable composition, in an amount of at least 10% by weight, based on the total weight of the first material. More highly filled actinic radiation curable compositions as first materials are also within the scope of the present invention. Often, the amount of filler is defined in terms of the volume of the filler divided by the total volume of the first material (including the filler). According embodiments of the invention, the first material includes the filler in a volume of at least 20 %, preferably at least 35 %, more preferably at least 40 %, more preferably at least %, most preferably at least 55 % of the at least one filler based on the total volume of the first material including the at least one filler. According to embodiments of the invention, the first material includes the filler in a volume of at most 85 %, preferably at most 80 %, and most preferably about 72 % of the at least one filler based on the total volume of the first material including the at least one filler. According to preferred embodiments, the first material comprises at least one filler which is an opaque filler (meaning that as formulated in the actinic radiation curable composition, the filler is opaque, i.e., impervious to the actinic radiation, in particular impervious to UV and visible light rays). The first material may comprise, for example, at least 10 vol.%, at least 15 vol.%, at least 20 vol.%, at least 25 vol.%, at least 30 vol.%, at least 35 vol.%, at least 40 vol.%, at least 45 vol.% or at least 50 vol.% of one or more opaque fillers. One or more opaque fillers may be employed in combination with one or more non-opaque fillers.

In preferred embodiments of the invention, the first material comprises at least one filler, in particular at least one opaque filler, which is insoluble in the other components of the actinic radiation curable composition. In particular, such filler does not dissolve in the actinic radiation curable monomer component of the actinic radiation curable composition, wherein the actinic radiation curable monomer component is the at least one cyanoacrylate plus any other actinic radiation curable compounds other than cyanoacrylates (such as (meth)acrylate-functionalized compounds and/or methylidene malonates). Typically, such actinic radiation curable monomer component is a liquid at room temperature (25°C). Further, it is preferred that at least one filler is insoluble in the solid resin matrix formed by curing the actinic radiation curable resin component. The use of one or more fillers which are insoluble in the cured resin matrix makes possible the production of composite materials from the actinic radiation curable compositions of the present invention.

The filler or fillers may be of any suitable shape or form. For example, the filler may take the form of powder, beads, microspheres, particles, granules, wires, fibers or combinations thereof. If in particulate form, the particles may be spheroid, flat, irregular or elongated in shape. High aspect particulate fillers may be utilized, for example. Hollow as well as solid fillers are useful in the present invention.

According to various embodiments of the invention, the filler may have an aspect ratio (i.e., the ratio of the length of an individual filler element, such as a particle or fiber, to the width of that individual filler element) of 1:1 or higher, e.g., greater than 1:1, at least 2:1, at least 3:1, at least 5:1, at least 10:1, at least 100:1, at least 1000:1; at least 10,000:1, at least 100,000:1, at least 500,000:1, at least 1,000,000:1 or even higher (i.e., effectively an infinite aspect ratio). According to other embodiments, the filler may have an aspect ratio not more than 2:1, not more than 3:1, not more than 5:1, not more than 10:1, not more than 100:1, not more than 1000:1; not more than 10,000:1, not more than 100,000:1, not more 500,000:1, or not more than 1,000,000:1

The surface of the filler may be modified in accordance with any of the methods or techniques known in the art. Such surface treatment methods include, without limitation, sizing (e.g., coating with one or more organic substances), silylation, oxidation, functionalization, neutralization, acidification, other chemical modifications and the like and combinations thereof.

According to some embodiments of the invention, the filler is sinterable or vitrifiable. As used herein, sinter means "coalesce into a solid or porous mass by heating (and optionally, but usually also compressing) without liquefaction." As used herein, vitrify means "convert into glass or a glassy substance by heat and fusion." Regardless of the above, the filler of the invention can be said to undergo a 'densification' upon being heated sufficient to fuse together, condense, or otherwise rearrange in a way that the filler occupies less volume.

The chemical nature of the filler may be varied and selected as may be desired in order to impart certain properties or characteristics to the product obtained upon curing the actinic radiation curable composition. For example, the filler may be inorganic or organic in character. Mixed organic/inorganic fillers may also be used. Carbon-based fillers (e.g., carbon fibers, carbon black, carbon nanotubes) as well as mineral fillers can be employed. Glass powders may be used in certain embodiments. Pre-ceramic powders, metal oxide powders, or metal powders are also contemplated.

According to certain embodiments of the invention, the filler is a ceramic precursor, or preceramic powder. Non-limiting examples of these ceramic precursors are cordierite, mullite, or spinel, mixtures that contain natural minerals (kaolinite, talc, serpentinite), oxides (MgO, Al₂O₃),tungsten carbide, barium titanate, strontium titanate), sialon (silicon aluminium oxynitride), silicon nitride (Si₃N₄), steatite (magnesium silicates), titanium carbide, uranium oxide (UO₂), yttrium barium copper oxide (YBa₂Cu₃O₇₋ₓ), zinc oxide (ZnO), zirconium dioxide (zirconia), quartz, and metal powders (Al, Mg). Preceramic polymers are also contemplated. Nonlimiting examples include silicon carbide (SiC), silicon oxycarbide (SiOₓC_{y}), silicon nitride(Si₃N₄), silicon carbonitride (Si₃+xN₄C_{x+y}), and silicon oxynitride (SiOxNy).

According to an embodiment of the invention, step c) is not performed and the at least one filler is included in step a), wherein the at least one filler is adapted to densify at a temperature equal to or higher than the temperature sufficient to decompose the cured actinic radiation curable composition, and wherein the at least one filler comprises a material selected from the group consisting of carbon fiber, carbon black, graphite, graphite felt, graphite foam, graphene, resorcinol-formaldehyde blends, polyacrylonitrile, rayon, petroleum pitch, natural pitch, resoles, carbon nanotubes, carbon soot, creosote, SiC, boron, WC, butyl rubber, boron nitride, fumed silica, nanoclay, silicon carbide, boron nitride, zirconium oxide, titanium dioxide, chalk, calcium sulfate, barium sulfate, calcium carbonate, silicates such as talc, mica or kaolin, silicas, aluminum hydroxide, magnesium hydroxide, and combinations thereof.

### Auxiliary Curable Compounds

Optionally, actinic radiation curable compositions in accordance with the present invention may additionally comprise one or more curable compounds which are not classifiable as cyanoacrylates. Such compounds, which may be referred to herein as auxiliary curable compounds, are compounds containing one or more functional groups per molecule that are capable of participating in curing or polymerization reactions with the cyanoacrylate(s) when the actinic radiation curable composition is cured. In particular, such auxiliary curable compounds may contain one or more ethylenically unsaturated functional groups, such as vinyl functional groups and (meth)acrylate functional groups. As used here, the term "(meth)acrylate" includes both acrylate and methacrylate. (Meth)acrylate-functionalized compounds useful as auxiliary curable compounds include monomeric as well as oligomeric (meth)acrylate compounds; mono(meth)acrylate-functionalized compounds and also poly(meth)acrylate-functionalized compounds (e.g., di-, tri- and tetra(meth)acrylate-functionalized compounds) can be used. Such auxiliary curable compounds may, in certain embodiments of the invention, be present in a total amount of 0.5 to 100 parts by weight, or 1 to 50 parts by weight, per 100 parts by weight in total of cyanoacrylates.

Any of the following types of (meth)acrylate-functionalized compounds may, for example, be employed in the actinic radiation curable compositions of the present invention, in combination with one or more cyanoacrylates: monomers such as (meth)acrylate esters of aliphatic mono-alcohols, (meth)acrylate esters of alkoxylated aliphatic mono-alcohols, (meth)acrylate esters of aliphatic polyols, (meth)acrylate esters of alkoxylated aliphatic polyols, (meth)acrylate esters of aromatic ring-containing alcohols, and (meth)acrylate esters of alkoxylated aromatic ring-containing alcohols; and oligomers such as epoxy (meth)acrylates, polyether (meth)acrylates, urethane (meth)acrylates, polyester (meth)acrylates (including amine- and sulfide-modified derivatives thereof); and combinations thereof. According to an embodiment, the first material further comprises at least one (meth)acrylate monomer or oligomer, preferably at least one monofunctional (meth)acrylate monomer or monofunctional (meth)acrylate oligomer.

Suitable (meth)acrylate-functionalized oligomers include, for example, polyester (meth)acrylates, polycarbonate (meth)acrylates, epoxy (meth)acrylates, polyether (meth)acrylates, urethane (meth)acrylates (sometimes also referred to as polyurethane (meth)acrylates or urethane (meth)acrylate oligomers) and combinations thereof, as well as amine-modified and sulfide-modified variations thereof.

Exemplary polyester (meth)acrylates include the reaction products of acrylic or methacrylic acid or mixtures thereof with hydroxyl group-terminated polyester polyols. The reaction process may be conducted such that a significant concentration of residual hydroxyl groups remain in the polyester (meth)acrylate or may be conducted such that all or essentially all of the hydroxyl groups of the polyester polyol have been (meth)acrylated. The polyester polyols can be made by polycondensation reactions of polyhydroxyl functional components (in particular, diols) and polycarboxylic acid functional compounds (in particular, dicarboxylic acids and anhydrides). To prepare the polyester (meth)acrylates, the hydroxyl groups of the polyester polyols are then partially or fully esterified by reacting with (meth)acrylic acid, (meth)acryloyl chloride, (meth)acrylic anhydride or the like. Polyester (meth)acrylates may also be synthesized by reacting a hydroxyl-containing (meth)acrylate such as a hydroxyalkyl (meth)acrylate (e.g., hydroxyethyl acrylate) with a polycarboxylic acid. The polyhydroxyl functional and polycarboxylic acid functional components can each have linear, branched, cycloaliphatic or aromatic structures and can be used individually or as mixtures.

Examples of suitable epoxy (meth)acrylates include the reaction products of acrylic or methacrylic acid or mixtures thereof with glycidyl ethers or esters.

Exemplary polyether (meth)acrylate oligomers include, but are not limited to, the condensation reaction products of acrylic or methacrylic acid or mixtures thereof with polyetherols which are polyether polyols. Suitable polyetherols can be linear or branched substances containing ether bonds and terminal hydroxyl groups. Polyetherols can be prepared by ring opening polymerization of epoxides and other oxygen-containing heterocyclic compounds (e.g., ethylene oxide, 1,2-propylene oxide, butene oxide, tetrahydrofuran and combinations thereof) with a starter molecule. Suitable starter molecules include water, hydroxyl functional materials, polyester polyols and amines. Polyetherols may also be obtained by the condensation of diols such as glycols.

Urethane (meth)acrylates (sometimes also referred to as "polyurethane (meth)acrylates") capable of being used in the curable compositions of the present invention include urethanes based on aliphatic and/or aromatic polyester polyols, polyether polyols and polycarbonate polyols and aliphatic and/or aromatic polyester diisocyanates and polyether diisocyanates capped with (meth)acrylate end-groups.

In various embodiments, the urethane (meth)acrylates may be prepared by reacting aliphatic and/or aromatic polyisocyanates (e.g., diisocyanates, triisocyanates) with OH group terminated polyester polyols (including aromatic, aliphatic and mixed aliphatic/aromatic polyester polyols), polyether polyols, polycarbonate polyols, polycaprolactone polyols, polydimethysiloxane polyols, or polybutadiene polyols, or combinations thereof to form isocyanate-functionalized oligomers which are then reacted with hydroxyl-functionalized (meth)acrylates such as hydroxyethyl (meth)acrylate or hydroxypropyl (meth)acrylate to provide terminal (meth)acrylate groups. For example, the urethane (meth)acrylates may contain two, three, four or more (meth)acrylate functional groups per molecule. Other orders of addition may also be practiced to prepare the polyurethane (meth)acrylate, as is known in the art. For example, the hydroxyl-functionalized (meth)acrylate may be first reacted with a polyisocyanate to obtain an isocyanate-functionalized (meth)acrylate, which may then be reacted with an OH group terminated polyester polyol, polyether polyol, polycarbonate polyol, polycaprolactone polyol, polydimethysiloxane polyol, polybutadiene polyol, or a combination thereof. In yet another embodiment, a polyisocyanate may be first reacted with a polyol, including any of the aforementioned types of polyols, to obtain an isocyanate-functionalized polyol, which is thereafter reacted with a hydroxyl-functionalized (meth)acrylate to yield a polyurethane (meth)acrylate. Alternatively, all the components may be combined and reacted at the same time.

Any of the above-mentioned types of oligomers may be modified with amines or sulfides (e.g., thiols), following procedures known in the art. Such amine- and sulfide-modified oligomers may be prepared, for example, by reacting a relatively small portion (e.g., 2-15%) of the (meth)acrylate functional groups present in the base oligomer with an amine (e.g., a secondary amine) or a sulfide (e.g., a thiol), wherein the modifying compound adds to the carbon-carbon double bond of the (meth)acrylate in a Michael addition reaction.

Illustrative examples of suitable monomeric (meth)acrylate-functionalized compounds include (meth)acrylated mono- and polyols (polyalcohols) and (meth)acrylated alkoxylated mono-alcohols and polyols. The mono-alcohols and polyols may be aliphatic (including one or more cycloaliphatic rings) or may contain one or more aromatic rings (as in the case of phenol or bisphenol A). "Alkoxylated" means that the base mono-alcohol or polyol has been reacted with one or more epoxides such as ethylene oxide and/or propylene oxide so as to introduce one or more ether moieties (e.g., -CH₂CH₂-O-) onto one or more hydroxyl groups of the mono-alcohol or polyol, prior to esterification to introduce one or more (meth)acrylate functional groups. For example, the amount of epoxide reacted with the mono-alcohol or polyol may be from about 1 to about 30 moles of epoxide per mole of mono-alcohol or polyol. Examples of suitable mono-alcohols include, but are not limited to, straight chain, branched and cyclic C1-C54 mono-alcohols (which may be primary, secondary or tertiary alcohols). For instance, the mono-alcohol may be a C1-C7 aliphatic mono-alcohol. In another embodiment, the mono-alcohol may be a C8-C24 aliphatic mono-alcohol (e.g., lauryl alcohol, stearyl alcohol). Examples of suitable polyols include organic compounds containing two, three, four or more hydroxyl groups per molecule such as glycols (diols), e.g., ethylene glycol, 1,2- or 1,3-propylene glycol, or 1,2-, 1,3- or 1,4-butylene glycol, neopentyl glycol, trimethylolpropane, triethylolpropane, pentaerythritol, glycerol and the like.

Representative, but not limiting, examples of suitable monomeric (meth)acrylate-functionalized compounds include: 1,3-butylene glycol di(meth)acrylate, 1,4-butanediol di(meth)acrylate, 1,6-hexanediol di(meth)acrylate, longer chain aliphatic di(meth)acrylates (such as those generally corresponding to the formula H₂C=CRC(=O)-O-(CH₂)ₘ-O-C(=O)CR'=CH₂, wherein R and R' are independently H or methyl and m is an integer of 8 to 24), alkoxylated (e.g., ethoxylated, propoxylated) hexanediol di(meth)acrylates, alkoxylated (e.g., ethoxylated, propoxylated) neopentyl glycol di(meth)acrylates, dodecyl di(meth) acrylates, cyclohexane dimethanol di(meth)acrylates, diethylene glycol di(meth)acrylates, dipropylene glycol di(meth)acrylates, alkoxylated (e.g., ethoxylated, propoxylated) bisphenol A di(meth)acrylates, ethylene glycol di(meth)acrylates, neopentyl glycol di(meth)acrylates, tricyclodecane dimethanol diacrylates, triethylene glycol di(meth)acrylates, tetraethylene glycol di(meth)acrylates, tripropylene glycol di(meth)acrylates, ditrimethylolpropane tetra(meth)acrylates, dipentaerythritol penta(meth)acrylates, alkoxylated (e.g., ethoxylated, propoxylated) pentaerythritol tetra(meth)acrylate, dipentaerythritol penta(meth)acrylates, pentaerythritol tetra(meth)acrylate, alkoxylated (e.g., ethoxylated, propoxylated) trimethylolpropane tri(meth)acrylates, alkoxylated (e.g., ethoxylated, propoxylated) glyceryl tri(meth)acrylates, trimethylolpropane tri(meth)acrylates, pentaerythritol tri(meth)acrylates, tris (2-hydroxy ethyl) isocyanurate tri(meth)acrylates, 2(2-ethoxyethoxy) ethyl (meth)acrylates, 2-phenoxyethyl (meth)acrylates, 3,3,5-trimethylcyclohexyl (meth)acrylates, alkoxylated lauryl (meth)acrylates, alkoxylated phenol (meth)acrylates, alkoxylated tetrahydrofurfuryl (meth)acrylates, caprolactone (meth)acrylates, cyclic trimethylolpropane formal (meth)acrylates, dicyclopentadienyl (meth)acrylates, diethylene glycol methyl ether (meth)acrylates, alkoxylated (e.g., ethoxylated, propoxylated) nonyl phenol (meth)acrylates, isobornyl (meth)acrylates, isodecyl (meth)acrylates, isooctyl (meth)acrylates, lauryl (meth)acrylates, methoxy polyethylene glycol (meth)acrylates, octyldecyl (meth)acrylates (also known as stearyl (meth)acrylates), tetrahydrofurfuryl (meth) acrylates, tridecyl (meth)acrylates, triethylene glycol ethyl ether (meth)acrylates, t-butyl cyclohexyl (meth)acrylates, dicyclopentadiene di(meth)acrylates, phenoxyethanol (meth)acrylates, octyl (meth)acrylates, decyl (meth)acrylates, dodecyl (meth)acrylates, tetradecyl (meth)acrylates, cetyl (meth)acrylates, hexadecyl (meth)acrylates, behenyl (meth)acrylates, diethylene glycol ethyl ether (meth)acrylates, diethylene glycol butyl ether (meth)acrylates, triethylene glycol methyl ether (meth)acrylates, dodecanediol di (meth)acrylates, dipentaerythritol penta/hexa(meth)acrylates, pentaerythritol tetra(meth)acrylates, alkoxylated (e.g., ethoxylated, propoxylated) pentaerythritol tetra(meth)acrylates, di-trimethylolpropane tetra(meth)acrylates, alkoxylated (e.g., ethoxylated, propoxylated) glyceryl tri(meth)acrylates, and tris (2-hydroxy ethyl) isocyanurate tri(meth)acrylates, and combinations thereof.

One or more methylidene malonates may optionally be present in the curable compositions of the present invention, in combination with one or more cyanoacrylates. As used herein, the term "methylidene malonate" refers to an organic compound which contains a carbon-carbon double bond, wherein one carbon atom involved in the carbon-carbon double bond is substituted with two ester groups (which may be the same as or different from each other).

Suitable methylidene malonates which can optionally be used in combination with one or more cyanoacrylates to formulate actinic radiation curable compositions in accordance with the present invention include compounds corresponding to formula (VI) wherein A is selected from the group consisting of CO₂R and CO₂CH₂CO₂R, wherein R is a C₁-C₈ alkyl group, and D is a carboxylic ester moiety CO₂R⁴ (with R⁴ having the same meaning as previously stated, in particular a C₁-C₈ alkyl group, such as methyl or ethyl).

Additional suitable types of auxiliary curable compounds useful in the present invention include, but are not limited to, 1,1-diester-1-alkenes (including methylidene malonates, which may be considered a type of 1,1-diester-1-alkene), 1,1-diketo-1-alkenes (e.g., methylidene beta-diketones), 1-ester-1-keto-1-alkenes (e.g., methylidene acetyl acetonates), 1,1-diamide-1-alkenes, 1-amide-1-keto-1-alkenes, 1-amide-1-ester-1-alkenes and/or icatonates.

Generally speaking, it will be preferred (especially where the actinic radiation curable composition is to be stored for some period of time after formulation) to avoid the use of auxiliary curable compounds which are nucleophilic in character, as the presence of such compounds in the actinic radiation curable composition may result in instability of the actinic radiation curable composition or lead to immediate (premature) curing of the actinic radiation curable composition. Thus, in certain embodiments of the invention, the auxiliary curable compound(s) utilized is or are non-nucleophilic (i.e., do not contain any nucleophilic functional groups).

### Acid Stabilizer

In preferred embodiments of the invention, particularly where the actinic radiation curable composition is to be stored for an extended period of time after being formulated and prior to being utilized to prepare a cured composition, the first material additionally comprises one or more acid stabilizers (sometimes referred to in the art as anionic polymerization inhibitors). Such acid stabilizers function as inhibitors of anionic polymerization, thereby enhancing storage stability of the actinic radiation curable composition and preventing premature curing.

Preferably, the one or more acid stabilizers are selected from the group consisting of Lewis acids. The acid stabilizers are selected preferably from the group consisting of boron trifluoride, boron trifluoride etherate complexes (e.g., boron trifluoride diethyl etherate complex), boron trifluoride dihydrate, trimethylsilyl triflate, sulphur dioxide, sulphur trioxide, nitrogen oxide and mixtures thereof, most preferably from boron trifluoride etherate complexes.

Other types of suitable acid stabilizers include protic acids such as hydrogen halides (e.g., hydrogen fluoride) and sulfonic acids (e.g., p-toluenesulfoinic acid).

In the first material, the content of acid stabilizer is generally between 1 and 1000 ppm respectively, e.g., 10 to 100 ppm based on the total weight of the first material.

### Radical Stabilizer

The first material of the present invention may include one or more radical stabilizers, which help to prevent premature polymerization due any radical mechanism such as autoxidation or thermal polymerization.

The radical stabilizers may be referred to as free radical polymerization inhibitors, and are preferably selected from hindered phenolic or polyphenolic compounds such as, hydroquinone, mono-tertiary-butyl hydroquinone, 2,5-di-tertiary-butyl-hydroquinone, p-methoxyphenol, butylated hydroxyanisole, 2,6-di-tert-butyl-p-cresol, 2,2-methylene-bis-(4-methyl-6-tert-butyl)phenol (MBETBP), p-tert-butyl catechol, 1 ,3,5-trimethyl-2,4,6-tris(3,5-di-fert-butyl-4-hydroxybenzyl)benzene, hydroxytoluene butyl ether, and mixtures thereof.

The actinic radiation curable compositions of the present invention may comprise, for example, up to 7000 ppm by weight radical stabilizer, based on the weight of the actinic radiation curable composition, e.g., between 1 and 7000 ppm by weight radical stabilizer based on the total weight of the first material.

### Thickening Agents

The first material of the present invention may optionally comprise one or more thickening agents (also known as viscosity control agents, thickeners or thickening conferring agents), which serve to modulate the viscosity of the formulation, most usually increasing this property. A suitable thickening agent for formulation can be selected from those that are compatible with the monomers with which it is combined. Thickening agents are well known in the art and may be, for example, poly(meth)acrylates, acylated cellulose polymers (e.g., cellulose acetate, cellulose acetate propionate), polyvinyl acetates, partially hydrolysed polyvinyl acetates, polyvinylpyrrolidones, polyoxylates, polycaprolactones, polycyanoacrylates, vinyl acetate copolymers (for example, copolymers with vinyl chloride), copolymers of (meth)acrylates with butadiene and styrene, copolymers of vinyl chloride and acrylonitrile, copolymers of ethylene and vinyl acetate, poly[butyleneterephthalate-co-polyethyleneglycolterephthalate], and copolymers of lactic acid and caprolactone. Such polymeric thickening agents may be distinguished from fillers, in the context of the present invention, by the fact that they are generally soluble in the actinic radiation curable resin component of the actinic radiation curable composition as well as in the polymeric matrix formed when the actinic radiation curable resin component is cured. However, it is recognized that certain of the substances taught herein as fillers may also function to some extent as thickening agents, while remaining insoluble in the actinic radiation curable resin component.

According to certain embodiments, the first material of the present invention comprise an amount of thickening agent of up to 15% by weight, up to 12% by weight, or up to 10% by weight, based on the weight of the actinic radiation curable composition (i.e., excluding any filler component). For example, the actinic radiation curable composition may comprise at least 0.1% by weight, at least 0.5% by weight or at least 1% by weight of thickening agent, based on the weight of the actinic radiation curable composition (i.e., excluding any filler component).

The composition of the invention may include a thixotropic agent in order to regulate the flow behavior thereof. It may be organic or inorganic and selected from the group consisting of hydrogenated castor oil, hydrogenated castor oil modified by reaction with an amine, polyamides, and silica (e.g., hydrophobic fumed or precipitated silica). However, if a thixotropic agent is present, its concentration is typically limited to no more than 5% by weight based on the total weight of the actinic radiation curable composition.

### Glycerol Triacetate

According to an embodiment, the first material may comprise from 1 to 20 wt.% by weight of glycerol triacetate by total weight of the actinic radiation curable composition (i.e., excluding any fillers). According to an embodiment, the composition may comprise, from 5 to 20 wt.%, from 3 to 15 %, from 8 to 12 wt.%, from 9 to 11 wt.% of glycerol triacetate based on the weight of the actinic radiation curable composition (i.e., excluding any fillers).

### Other Additives

Depending upon the use end application and the attributes desired in the uncured and cured actinic radiation curable composition, the first material may be formulated to contain one or more additional additives other than those already mentioned, in particular one or more additives selected from the group consisting of plasticizers other than glycerol triacetate (e.g., other acetates, trimetallate, phthalate, adipate and benzoate plasticizers), refractive index modifiers, adhesion promoters, accelerating agents (also known as cure speed regulating agents), solvents, tougheners, heat stabilizers, dyes, pigments and the like, as well as any other types of additives known in the curable resin art (especially the curable cyanoacrylate resin art).

### Methods of Making, and Curing the Actinic radiation curable Composition

The actinic radiation curable compositions of the present invention may be prepared by any suitable method, including simply mixing together the various desired ingredients in the desired proportions. According to certain embodiments of the invention, the actinic radiation curable composition of the first material is prepared and stored separately from the filler component, with the two components then being combined to form the first material shortly before curing the actinic radiation curable composition. The actinic radiation curable composition is preferably stored in packaging which is shielded from light having a wavelength effective to initiate curing of the actinic radiation curable composition. For example, the package or container may be shielded from light having wavelengths between 300 nm and 750 nm. The interior surface of the package or container should also be selected to be compatible with maintaining the actinic radiation curable composition in uncured, stable form over an extended period of storage time. For example, the interior package or container surface may be constructed of a low energy surface plastic or passivated glass or metal.

Actinic radiation curable compositions in accordance with the present invention can be used as coatings, adhesives, sealants, potting compounds, encapsulants, and other such products, but are of particular interest for curing in the bulk and in the production of bulk objects or monoliths by photocuring.

A method for curing the actinic radiation curable compositions of the present invention using light irradiation may comprise irradiating the actinic radiation curable composition with ultraviolet light, visible light or near infrared light using any suitable radiation source such as a long wave UV lamp, a low intensity arc lamp, a high intensity arc lamp, a high pressure mercury lamp, a halogen lamp, a light emitting diode (LED), a xenon lamp, or sunlight. Ultraviolet (UV) and visible light are generally preferred. The effective wavelength(s) of the irradiated light will vary depending upon the particular photoinitiator system employed, e.g., the type(s) of metallocene compound(s) and/or photocleavable compounds present in the photoinitiator system.

Thus, the light source employed should provide light in the wavelength range dictated by the particular photoinitiator system used. Ideally the wavelength of the light emitted from the light source (such as an LED) should couple strongly with the absorption of the photoinitiator system of the actinic radiation curable composition. Light in wavelengths outside the desired photopolymerization range for the particular photoinitiator system could be filtered out. Still further, the light source employed can emit light to penetrate throughout one or more faces or sides of the composite part being fabricated.

According to certain embodiments of the invention, the actinic radiation curable composition may be formulated to be capable of being cured upon exposure to light having a wavelength of 350 nm to 490 nm, or 365 nm to 465 nm, or 380 nm to 410 nm. The light intensity may be, for example, from 20 mW/cm² to 150 mW/cm², or 40 mW/cm² to 90 mW/cm². The actinic radiation curable composition may be stationary when exposed to light. Alternatively, the actinic radiation curable composition may be in motion when exposed to light (for example, on a conveyor belt). A portion of actinic radiation curable composition to be photocured in accordance with the present invention to form a composite material or article may be irradiated with light from a single direction or from multiple directions.

It is also possible, within the scope of the present invention, to build up an article layer-by-layer, or portion-by-portion using the actinic radiation curable compositions of the invention, wherein a first thin layer or portion of the actinic radiation curable composition having, for example, a thickness of 10 microns to 500 microns is formed and exposed to actinic radiation, with a second thin layer or portion of the actinic radiation curable composition then being deposited on the light-cured first thin layer or portion and exposed to light, followed by one or more successive thin layers or portions of the actinic radiation curable composition wherein such successive thin portions are also exposed to actinic radiation to cure them before depositing the next thin layer or portion.

It should be appreciated that the present invention may be utilized to form any article, shape or part for any application. All that thus is intended by an "article" is a three-dimensional shape configured for the intended application. Using the present invention, it is also possible to produce articles in which one or more portions of the article comprise a material obtained by curing of a actinic radiation curable composition in accordance with the invention and one or more portions of a material (e.g., metal, ceramic, plastic) that is not derived from such actinic radiation curable composition. For example, the article may comprise a substrate of a first material (not derived from an actinic radiation curable composition in accordance with the invention) having at least one surface which is in contact with (e.g., adhered or bonded to) a material in accordance with the present invention.

While the actinic radiation curable composition is being exposed to actinic radiation in a manner effective to initiate curing, the actinic radiation curable composition may suitably be at about room temperature (e.g., about 10°C to about 35°C). However, it is also possible to maintain the actinic radiation curable composition while being exposed to actinic radiation at an elevated temperature (e.g., greater than 35°C to about 100°C). If desired, a post-photocuring operation can be carried out on the thus-produced article. For example, thermal curing, as in a heated oven, may be utilized.

The composition of the present invention may be used to produce green ceramic parts by a process of binder jet printing. Binder jetting is a method of 3D printing in which an industrial printhead quickly deposits, and actinic radiation such as a UV light cures, a liquid bonding agent onto a thin portion of powdered particles, either metal, sand, ceramics, glass, or composites. The process is repeated portion by portion, using a map from a digital design file, until the object is complete. If the powder is ceramic precursor, for example, the completed cured, green ceramic part may be sintered, in which the sintering step also may burn away the cyanaoacrylate binder of the invention and leave behind the finished ceramic. Because the present inventive method produces so little ash, the finished ceramic article is very pure with few occlusions or voids. The same procedure may be used to produce metal parts as well, in which the low ash of the cyanoacrylate resins provides a metal article with low level of impurities from ash and few occlusions or voids.

Illustrative, non-limiting aspects of the invention may be summarized as follows.
Aspect 1. A method of forming an article of manufacture comprising:
   a) forming a precursor to the article of manufacture using a first material, wherein the first material comprises
      i) an actinic radiation curable composition and
      ii) optionally at least one filler;
   b) actinically curing the precursor to form a cured precursor article comprising a cured actinic radiation curable composition;
   c) optionally forming an intermediate article of manufacture from a second material while using the cured precursor article as at least one of a support, a positive mold, or a negative mold for the second material; and
   d) heating the cured precursor article to a temperature sufficient to decompose the cured actinic radiation curable composition to: (i) form the article of manufacture, when step c) is not performed or (ii) isolate the article of manufacture by removal of the first material from the intermediate article of manufacture, when step c) is performed;
   wherein the actinic radiation curable composition comprises at least one cyanoacrylate and at least one photoinitiator.
Aspect 2. The method of aspect 1, wherein step c) is not performed and the first material includes the at least one filler.
Aspect 3. The method of aspect 1, wherein step c) is performed and, during step c), at least a portion of the cured precursor article contacts at least a portion of the intermediate article of manufacture.
Aspect 4. The method of any of aspects 1-3, wherein the at least one cyanoacrylate comprises at least one of n-butyl cyanoacrylate (n-BCA), octyl cyanoacrylate, 2-octyl cyanoacrylate, methyl 2-cyanoacrylate (MCA), ethyl 2-cyanoacrylate (ECA), methoxyethyl cyanoacrylate (MECA), or a combination thereof; preferably at least one of MCA, ECA, MECA or a combination thereof; more preferably ECA, MECA, or a combination thereof.
Aspect 5. The method of any of aspects 1-4, wherein heating the cured precursor article to the temperature sufficient to decompose the cured actinic radiation curable composition to form the article of manufacture produces less than 0.2 wt.%, preferably less than 0.1 wt.%, more preferably less than 0.05 wt.% of ash based on the weight of the first material.
Aspect 6. The method of any of aspects 1-5, wherein the actinic radiation curable composition forms a solid resin matrix when cured and the at least one filler is present and remains insoluble in the solid resin matrix.
Aspect 7. The method of any of aspects 1, wherein the first material comprises at least 40%, preferably at least 45 %, more preferably at least 55 % of the at least one filler by volume, and at most 85 %, preferably at most 80 %, and most preferably 72% of the at least one filler by volume based on the total volume of the first material including the at least one filler.
Aspect 8. The method of any of aspects 1-7, wherein step a) and step b) comprise the following steps performed iteratively:
   a1) contacting a first portion of the first material with a substrate;
   b1) curing the first portion, at least partially, to provide a cured first region;
   a2) contacting a second portion of the first material with at least a portion of the cured first region;
   b2) curing the second portion, at least partially, to provide a cured second region adhered to at least a portion of the cured first region; and
   repeating steps a2) and b2) a desired number of times to form the cured precursor article.
Aspect 9. The method of any of aspects 1-7, wherein step a) and step b) comprise the following steps performed iteratively:
   a1) coating a first layer of the first material in liquid form onto a substrate;
   b1) exposing the first layer imagewise to actinic radiation to form a first exposed imaged cross-section in a first exposed area, wherein the radiation is of sufficient intensity and duration to cause at least partial curing of the first layer in the first exposed area;
   a2) coating an additional layer of the first material in liquid form onto the previously exposed imaged cross-section;
   b2) exposing the additional layer imagewise to actinic radiation to form an additional imaged cross-section in a second exposed area, wherein the radiation is of sufficient intensity and duration to cause at least partial curing of the additional layer in the second exposed area and to cause adhesion of the additional layer to the previously exposed imaged cross-section; repeating steps a2) and b2) a desired number of times to form the cured precursor article.
Aspect 10. The method of aspect 9, wherein the substrate is a powder bed comprising a material selected from the group consisting of ceramic, metal, and a polymer.
Aspect 11. The method of any of aspects 1-7, wherein steps a) and b) together comprise at least the following steps:
   a1) providing a carrier and a build surface, the carrier and build surface defining a build region there between;
   a2) filling the build region with the first material;
   b1) continuously or intermittently irradiating the build region with actinic radiation to form a cured composition from the first material;
   a3) continuously or intermittently advancing the carrier away from the build surface;
   and repeating steps a2), b1), and a3) a desired number of times to form the cured precursor article.
Aspect 12. The method of any of aspects 1-11, wherein, after step d), less than 0.01 grams per cm² of ash remain on a surface of the article of manufacture.
Aspect 13. The method of any of aspects -11, wherein, in step d), decomposition products of the first material are isolated.
Aspect 14. The method of aspect 13, wherein at least a portion of the isolated decomposition products are reused in step a).
Aspect 15. The method of any of aspects 1, 3-5, or 8-14, wherein the first material does not comprise the at least one filler and the Brookfield viscosity of the first material is no more than 200 mPa.s at 40°C.
Aspect 16. The method of any of aspects 1 or 3-15, wherein step c) is performed.
Aspect 17. The method of any of aspects 1-14 or 16, wherein the at least one filler is included in step a), wherein the at least one filler is adapted to densify at a temperature equal to or higher than the temperature sufficient to decompose the cured actinic radiation curable composition, and wherein the at least one filler comprises a material selected from the group consisting of carbon fiber, carbon black, graphite, graphite felt, graphite foam, graphene, resorcinol-formaldehyde blends, polyacrylonitrile, rayon, petroleum pitch, natural pitch, resoles, carbon nanotubes, carbon soot, creosote, SiC, boron, WC, butyl rubber, boron nitride, fumed silica, nanoclay, silicon carbide, boron nitride, zirconium oxide, titanium dioxide, chalk, calcium sulfate, barium sulfate, calcium carbonate, silicates such as talc, mica or kaolin, silicas, aluminum hydroxide, magnesium hydroxide, and combinations thereof.
Aspect 18. The method of any of aspects 1-17, wherein the first material comprises from 1 to 20 wt.% , preferably from 3 to 15 wt.%, more preferably from 8 to 12 wt.%, most preferably from 9 to 11 wt.% of glycerol triacetate based on the weight of the first material.
Aspect 19. The method of any of aspects 1-18, wherein the first material further comprises at least one (meth)acrylate monomer or oligomer.

Within this specification, embodiments have been described in a way which enables a clear and concise specification to be written, but it is intended and will be appreciated that embodiments may be variously combined or separated without departing from the invention. For example, it will be appreciated that all preferred features described herein are applicable to all aspects of the invention described herein.

In some embodiments, the invention herein can be construed as excluding any element or process step that does not materially affect the basic and novel characteristics of the actinic radiation curable compositions, composite materials prepared therefrom and methods for making and using such actinic radiation curable compositions described herein. Additionally, in some embodiments, the invention can be construed as excluding any element or process step not specified herein.

Although the invention is illustrated and described herein with reference to specific embodiments, the invention is not intended to be limited to the details shown. Rather, various modifications may be made in the details within the scope and range of equivalents of the claims and without departing from the invention.

### EXAMPLES

The compositions shown in Table 1 were prepared and thermolyzed at 500°C and 800°C under nitrogen. More specifically, the device used to thermolyze the samples was a Mettler TGA System TGA 2 thermobalance (Columbus, OH, USA) with a Gas Controller GC 401. The sample weight was 7-10 mg, and the nitrogen flow was 40-60 mL/min. The temperature was heated at 10 °C/min starting from 30 °C, with a temperature accuracy of (±) 1 K. Data sampling occurred at a rate of 10 data points per second.

The amount of char (also referred to herein as ash) was measured immediately upon reaching the target temperature and after 1 hour at the target temperature by measuring the weight of the char remaining in the device (to an accuracy of 1 ppm) and dividing that weight by the starting weight of the material. Tₗₒₛₛ is the temperature at which 2 % by weight or 5 % by weight, as indicated, of the sample was lost. PMMA is polymethylmethacylate, GTA is glycerol triacetate in weight % by total weight of the resin (also referred to as the actinic radiation curable composition, namely, all ingredients other than the filler in the composition. Viscosity is Brookfield viscosity at 25°C. MCA is methyl 2-cyanoacrylate; ECA is ethyl 2-cyanoacrylate; and MECA is methoxyethyl cyanoacrylate. All amounts are in weight percent by total weight of the resin in the composition.

**Table 1: Compositions and Thermolysis results**

| Composition | Viscosity, mPa.s | Tₗₒₛₛ, 2%, °C | Tₗₒₛₛ, 5%, °C | Char Yield 500°C Wt% | Char Yield 500°C 1 hr. Wt% | Char Yield 800°C Wt% | Char Yield 800°C 1 hr. Wt% |
|---|---|---|---|---|---|---|---|
| (1) N3D C1700^{∗} | 185.0 | - | - | - | - | - | 0.020 |
| (2) MCA, no PMMA | 2.2 | 200 | 212 | 0.510 | 0.470 | 0.310 | 0.174 |
| (3) MCA, 5% PMMA | 85 | 191 | 209 | 0.313 | 0.310 | 0.136 | 0.000 |
| (4) ECA, no PMMA | 3.5 | 183 | 193 | 0.225 | 0.169 | 0.092 | 0.000 |
| (5) ECA, 5% PMMA | 95 | 200 | 213 | 0.189 | 0.095 | 0.000 | 0.000 |
| (6) MECA, no PMMA | 5.5 | 166 | 181 | 0.234 | 0.181 | 0.140 | 0.600 |
| (7) MECA, 5% GTA, no PMMA | 7.5 | 156 | 172 | 0.280 | 0.250 | 0.210 | 0.100 |
| (8) MECA, 10% GTA, no PMMA | 7.5 | 148 | 167 | 0.110 | 0.50 | 0.020 | 0.000 |
| (9) MECA, 5% PMMA | 80.0 | 160 | 178 | 0.155 | 0.117 | 0.128 | 0.096 |

| | | | | | | | |
|---|---|---|---|---|---|---|---|
| ^{∗}Comparative Example | | | | | | | |

### Example N3D C1700 (Table entry #1)

To a sample of N3D-C1700 (50.1 grams), low ash castable resin commercially available from Sartomer, was added phenylbis(2,4,6-trimethylbenzoyl)phosphine oxide (125 mg) and the sample allowed to mix for 12 hours over bottle mixing rollers at ambient temperature. The resulting mixture was deposited dropwise onto a PTFE substrate and photocured with a 405nm light source for 60 seconds. The resulting polymer was placed in a dessicator for 72 hours before thermogravimetric analysis.

### Example MCA, no PMMA (Table entry #2)

To a sample of 2-methylcyanoacrylate (57.93 grams) purified by distillation was added a 2000 ppm solution of boron trifluoride etherate in 2-methylcyanoacrylate (1.80 grams) and the sample agitated. The mixture was then shielded from light and to the mixture was added a 5%wt solution of ferrocene in glycerol triheptanoate (0.240 grams) followed by (diethylgermanediyl)bis((4-methoxyphenyl)methanone) (0.030 grams) and the resulting solution allowed to stir via magnetic agitation for 15 minutes or until all solids fully dissolved. The resulting curable composition was deposited dropwise onto a PTFE substrate and photocured with a 405nm light source for 60 seconds. The resulting polymer was then placed in a desiccator for 72 hours before thermogravimetric analysis.

### Example MCA. 5% PMMA (Table entry #3)

To a sample of 2-methylcyanoacrylate (27.47 grams) purified by distillation was added a 2000 ppm solution of boron trifluoride etherate in 2-methylcyanoacrylate (0.900 grams) and the sample agitated. The mixture was equipped with a magnetic stirrer and heated to 60°C in an oil bath and once at temperature, a fine powder of poly(methyl methacrylate) (1.50 grams) was added. The resulting mixture was allowed to cool and then shielded from light and to the mixture was added a 5%wt solution of ferrocene in glycerol triheptanoate (0.120 grams) followed by (diethylgermanediyl)bis((4-methoxyphenyl)methanone) (0.015 grams) and the resulting solution allowed to stir via magnetic agitation for 15 minutes or until all solids fully dissolved. The resulting curable composition was deposited dropwise onto a PTFE substrate and photocured with a 405nm light source for 60 seconds. The resulting polymer was then placed in a desiccator for 72 hours before thermogravimetric analysis.

### Example ECA, no PMMA (Table entry #4)

To a sample of 2-ethylcyanoacrylate (57.93 grams) purified by distillation was added a 2000 ppm solution of boron trifluoride etherate in 2-ethylcyanoacrylate (1.80 grams) and the sample agitated. The mixture was then shielded from light and to the mixture was added a 5%wt solution of ferrocene in glycerol triheptanoate (0.240 grams) followed by (diethylgermanediyl)bis((4-methoxyphenyl)methanone) (0.030 grams) and the resulting solution allowed to stir via magnetic agitation for 15 minutes or until all solids fully dissolved. The resulting curable composition was deposited dropwise onto a PTFE substrate and photocured with a 405nm light source for 60 seconds. The resulting polymer was then placed in a desiccator for 72 hours before thermogravimetric analysis.

### Example ECA, 5% PMMA (Table entry #5)

To a sample of 2-ethylcyanoacrylate (27.47 grams) purified by distillation was added a 2000 ppm solution of boron trifluoride etherate in 2-ethylcyanoacrylate (0.900 grams) and the sample agitated. The mixture was equipped with a magnetic stirrer and heated to 60°C in an oil bath and once at temperature, a fine powder of poly(methyl methacrylate) (1.50 grams) was added. The resulting mixture was then allowed to cool and shielded from light and to the mixture was added a 5%wt solution of ferrocene in glycerol triheptanoate (0.120 grams) followed by (diethylgermanediyl)bis((4-methoxyphenyl)methanone) (0.015 grams) and the resulting solution allowed to stir via magnetic agitation for 15 minutes or until all solids fully dissolved. The resulting curable composition was deposited dropwise onto a PTFE substrate and photocured with a 405nm light source for 60 seconds. The resulting polymer was then placed in a desiccator for 72 hours before thermogravimetric analysis.

### Example MECA. no PMMA (Table Entry #6)

To a sample of 2-methoxyethylcyanoacrylate (57.93 grams) purified by distillation was added a 2000 ppm solution of boron trifluoride etherate in 2-methoxyethylcyanoacrylate (1.80 grams) and the sample agitated. The mixture was then shielded from light and to the mixture was added a 5%wt solution of ferrocene in glycerol triheptanoate (0.240 grams) followed by (diethylgermanediyl)bis((4-methoxyphenyl)methanone) (0.030 grams) and the resulting solution allowed to stir via magnetic agitation for 15 minutes or until all solids fully dissolved. The resulting curable composition was deposited dropwise onto a PTFE substrate and photocured with a 405nm light source for 60 seconds. The resulting polymer was then placed in a desiccator for 72 hours before thermogravimetric analysis.

### Example MECA. 5% GTA, no PMMA (Table Entry #7)

To a sample of 2-methoxyethylcyanoacrylate (57.93 grams) purified by distillation was added a 2000 ppm solution of boron trifluoride etherate in 2-methoxyethylcyanoacrylate (1.80 grams), glycerol triacetate (GTA) (3.00 grams) and the sample agitated. The mixture was then shielded from light and to the mixture was added a 5%wt solution of ferrocene in glycerol triheptanoate (0.240 grams) followed by (diethylgermanediyl)bis((4-methoxyphenyl)methanone) (0.030 grams) and the resulting solution allowed to stir via magnetic agitation for 15 minutes or until all solids fully dissolved. The resulting curable composition was deposited dropwise onto a PTFE substrate and photocured with a 405nm light source for 60 seconds. The resulting polymer was then placed in a desiccator for 72 hours before thermogravimetric analysis.

### Example MECA. 10% GTA, no PMMA (Table Entry #8)

To a sample of 2-methoxyethylcyanoacrylate (51.93 grams) purified by distillation was added a 2000 ppm solution of boron trifluoride etherate in 2-methoxyethylcyanoacrylate (1.80 grams), glycerol triacetate (GTA) (6.00 grams) and the sample agitated. The mixture was then shielded from light and to the mixture was added a 5%wt solution of ferrocene in glycerol triheptanoate (0.240 grams) followed by (diethylgermanediyl)bis((4-methoxyphenyl)methanone) (0.030 grams) and the resulting solution allowed to stir via magnetic agitation for 15 minutes or until all solids fully dissolved. The resulting curable composition was deposited dropwise onto a PTFE substrate and photocured with a 405nm light source for 60 seconds. The resulting polymer was then placed in a desiccator for 72 hours before thermogravimetric analysis.

### Example MECA. 5% PMMA (Table Entry #9)

To a sample of 2-methoxyethylcyanoacrylate (27.47 grams) purified by distillation was added a 2000 ppm solution of boron trifluoride etherate in 2-methoxyethylcyanoacrylate (0.900 grams) and the sample agitated. The mixture was equipped with a magnetic stirrer and heated to 60°C in an oil bath and once at temperature, a fine powder of poly(methyl methacrylate) (1.50 grams) was added. The resulting mixture was then allowed to cool and shielded from light and to the mixture was added a 5%wt solution of ferrocene in glycerol triheptanoate (0.120 grams) followed by (diethylgermanediyl)bis((4-methoxyphenyl)methanone) (0.015 grams) and the resulting solution allowed to stir via magnetic agitation for 15 minutes or until all solids fully dissolved. The resulting curable composition was deposited dropwise onto a PTFE substrate and photocured with a 405nm light source for 60 seconds. The resulting polymer was then placed in a desiccator for 72 hours before thermogravimetric analysis.

These results demonstrate that MECA including 10% GTA and no PMMA provides the best results in terms of the desirable low viscosity and no ash at 800°C thermolysis. Surprisingly, the MECA composition including 5% GTA produced more ash than the sample with twice as much GTA. Also surprisingly, the MECA samples with 10% GTA or 5% GTA had less ash than the neat MECA sample. The results also show that the cyanoacrylate compositions all have much reduced viscosity compared to the N3D C1700 commercial product.

## Claims

1. A method of forming an article of manufacture comprising:
a) forming a precursor to the article of manufacture using a first material, wherein the first material comprises
i) an actinic radiation curable composition and
ii) optionally at least one filler;
b) actinically curing the precursor to form a cured precursor article comprising a cured actinic radiation curable composition;
c) optionally forming an intermediate article of manufacture from a second material while using the cured precursor article as at least one of a support, a positive mold, or a negative mold for the second material; and
d) heating the cured precursor article to a temperature sufficient to decompose the cured actinic radiation curable composition to: (i) form the article of manufacture, when step c) is not performed or (ii) isolate the article of manufacture by removal of the first material from the intermediate article of manufacture, when step c) is performed;
wherein the actinic radiation curable composition comprises at least one cyanoacrylate and at least one photoinitiator.

2. The method of claim 1, wherein step c) is not performed and the first material includes the at least one filler.

3. The method of claim 1, wherein step c) is performed and, during step c), at least a portion of the cured precursor article contacts at least a portion of the intermediate article of manufacture.

4. The method of any of claims 1 to 3, wherein the at least one cyanoacrylate comprises at least one of n-butyl cyanoacrylate (n-BCA), octyl cyanoacrylate, 2-octyl cyanoacrylate, methyl 2-cyanoacrylate (MCA), ethyl 2-cyanoacrylate (ECA), methoxyethyl cyanoacrylate (MECA), or a combination thereof; preferably at least one of MCA, ECA, MECA or a combination thereof; more preferably ECA, MECA, or a combination thereof.

5. The method of any of claims 1 to 4, wherein heating the cured precursor article to the temperature sufficient to decompose the cured actinic radiation curable composition to form the article of manufacture produces less than 0.2 wt.%, preferably less than 0.1 wt.%, more preferably less than 0.05 wt.% of ash based on the weight of the first material.

6. The method of any of claims 1 to 5, wherein the actinic radiation curable composition forms a solid resin matrix when cured and the at least one filler is present and remains insoluble in the solid resin matrix.

7. The method of any of claims 1 to 6, wherein the first material comprises at least 40%, preferably at least 45 %, more preferably at least 55 % of the at least one filler by volume, and at most 85 %, preferably at most 80 %, and most preferably 72% of the at least one filler by volume based on the total volume of the first material including the at least one filler.

8. The method of any of claims 1 to 7, wherein step a) and step b) comprise the following steps performed iteratively:
a1) contacting a first portion of the first material with a substrate;
b1) curing the first portion, at least partially, to provide a cured first region;
a2) contacting a second portion of the first material with at least a portion of the cured first region;
b2) curing the second portion, at least partially, to provide a cured second region adhered to at least a portion of the cured first region; and
repeating steps a2) and b2) a desired number of times to form the cured precursor article.

9. The method of any of claims 1 to 8, wherein, after step d), less than 0.01 grams per cm² of ash remain on a surface of the article of manufacture.

10. The method of any of claims 1 to 9, wherein, in step d), decomposition products of the first material are isolated.

11. The method of claim 13, wherein at least a portion of the isolated decomposition products are reused in step a).

12. The method of any of claims 1, 3 to 5, or 8 to 11, wherein the first material does not comprise the at least one filler and the Brookfield viscosity of the first material is no more than 200 mPa.s at 40°C.

13. The method of any of claims 1 to 11, wherein the at least one filler is included in step a), wherein the at least one filler is adapted to densify at a temperature equal to or higher than the temperature sufficient to decompose the cured actinic radiation curable composition, and wherein the at least one filler comprises a material selected from the group consisting of carbon fiber, carbon black, graphite, graphite felt, graphite foam, graphene, resorcinol-formaldehyde blends, polyacrylonitrile, rayon, petroleum pitch, natural pitch, resoles, carbon nanotubes, carbon soot, creosote, SiC, boron, WC, butyl rubber, boron nitride, fumed silica, nanoclay, silicon carbide, boron nitride, zirconium oxide, titanium dioxide, chalk, calcium sulfate, barium sulfate, calcium carbonate, silicates such as talc, mica or kaolin, silicas, aluminum hydroxide, magnesium hydroxide, and combinations thereof.

14. The method of any of claims 1 to 13, wherein the first material comprises from 1 to 20 wt.% , preferably from 3 to 15 wt.%, more preferably from 8 to 12 wt.%, most preferably from 9 to 11 wt.% of glycerol triacetate based on the weight of the first material.

15. The method of any of claims 1 to 14, wherein the first material further comprises at least one (meth)acrylate monomer or oligomer.
